# EUROPÄISCHE PATENTSCHRIFT

(11) **EP 1 440 761 B1**
(45) Veröffentlichungstag und Bekanntmachung des Hinweises auf die Patenterteilung: **18.08.2010**
(21) Anmeldenummer: 03029397.1
(22) Anmeldetag: 20.09.1996
(51) Int. Cl.: B23K 26/00, B23K 33/00, B23K 26/32, B23D 35/00, B21D 24/16, B23K 26/24

(54) **Verfahren zum Besäumen eines tiefgezogenen Blechteils**
Process for trimming a deep drawn sheet metal part
Procédé d'ébavurage de tôles formées par emboutissage

(30) Priorität: 04.11.1995 DE 19541206
(43) Veröffentlichungstag der Anmeldung: 28.07.2004
(62) Teilanmeldung aus: 96115095.0
(73) Patentinhaber: Volkswagen AG, 38436 Wolfsburg (DE)
(72) Erfinder: Hammer, Thorge, Dipl.-Ing, 38479 Tappenbeck (DE); Joho, Heinz-Georg, 38462 Grafhorst (DE); Anders, Michael Dipl.-Ing., 14055 Berlin (DE); Herzog, Frank, Dipl.-Ing., 38464 Gross Twülpstedt (DE); Sikora, Ralf Dipl.-Ing., 14532 Stahnsdorf (DE)
(74) Vertreter: Scheffler, Jörg

(56) Entgegenhaltungen:
- EP-A- 0 178 394
- DE-A- 2 355 241
- DE-A- 3 515 598
- DE-A- 3 909 471
- DE-C- 3 812 448
- FR-A- 2 431 341
- US-A- 4 494 428
- US-A- 5 221 585
- PATENT ABSTRACTS OF JAPAN vol. 1998, no. 06, 30. April 1998 (1998-04-30) & JP 10 043819 A (MITSUBISHI MATERIALS CORP), 17. Februar 1998 (1998-02-17)

## Beschreibung

Die Erfindung betrifft ein Verfahren gemäß dem Oberbegriff des Anspruchs 1. Die DE 23 55 241 A offenbart ein solches Verfahren.

Die Erfindung bezieht sich weiterhin auf ein Blechtauteil, insbesondere Karosseriebauteil, das aus zumindest zwei dünnen Blechbauteilen besteht, die mittels einer so ausgeführten Schweissnaht verbunden sind.

Schließlich bezieht sich die Erfindung auch auf tiefgezogene Blechteile, die mit dem Laserschweißverfahren zu einem Blechbauteil, insbesondere zu einem Karosseriebauteil zusammengefügt werden sollen.

Zu den industriell wichtigsten Fügeverfahren, insbesondere in der Automobilindustrie, zählen Schweißverfahren, bei denen zwei Stahlbleche mittels einer Laserschweißnaht verbunden werden. Es ist schwierig, Schweißnähte hoher Güter auf solchen Stahlblechen herzustellen, die mit einem korrosionsschützenden Werkstoff beschichtet sind, dem einem deutlich niedrigeren Schmelzpunkt als Stahl aufweist. Wie bekannt ist, liegt dies daran, dass der Beschichtungswerkstoff, beispielsweise Zink, beim Schweißvorgang zunächst schmilzt und teilweise verdampft, wobei die entstehenden Dampfblasen das entstehende Stahlschmelzbad der im Entstehen befindlichen Schweißnaht stören. So kommt es beispielsweise zu Kratern in der Schweißnaht, Auswürfen und anderen Unregelmäßigkeiten. Die geschilderten Probleme beim Laserschweißen von beschichteten Stahlblechen werden in der Literatur auch unter dem Stichwort "Entgasungsproblematik" behandelt.

Es sind verschiedene Lösungsansätze vorgeschlagen worden, um die Entgasungsproblematik zu lösen. Aus der EP-PS 0 178 394 B1 ist ein Verfahren bekannt, bei dem vorgeschlagen wird, bei zwei miteinander zu verschweißenden Blechen, die in Form eines Überlappstoßes angeordnet sind, durch entsprechende Formgestaltung der Bleche dafür Sorge zu tragen, dass der Schweißbereich mit der externen Umgebung durch wenigstens einen Durchlass in Strömungsverbindung steht. Bei dem aus diesem Stand der Technik bekannten Verfahren ist vorgesehen, dass der Laserstrahl auf die Oberseite eines Bleches des Überlappstoßes gerichtet ist und dieses zunächst durchschweißt, bevor soviel Energie in die Schmelze eingeleitet ist, dass das Schmelzbad auch das zweite, sozusagen unten liegende Blech erreicht. Bei diesem Verfahren ist nachteilig, dass wegen des Durchschweißens eines Bleches Laserstrahlen mit hoher Leistung verwendet werden müssen. Darüber hinaus ist es bei den vorgeschlagenen Verfahren nicht möglich, eines der beiden miteinander zu verbindenden Bleche unmittelbar im Bereich seiner Kante zu verschweißen, da dann bei den vorgeschlagenen Formgebungen zum Erzeugen einer Entgasungskammer, d.h. eines Durchlasses in Strömungsrichtung, kein Ansetzen eines Klemmittels möglich wäre. Dies ist jedoch insbesondere in der automatisierten industriellen Fertigung von Schweißnähten unerlässlich.

Aus der DE-PS 38 12 448 C1 ist bekannt, ein Verbindungsbereich zweier beschichteter Dünnbleche zur Lösung der genannten Entgasungsproblematik so zu gestalten, dass die beiden dünnen Bleche entlang der Schweißnaht mit unterschiedlichen Krümmungsradien aufeinander stoßen und beidseitig der Schweißnaht voneinander beabstandet sind. Diese auch als "kissing weld" bekannte Technik setzt wiederum voraus, dass der Laserstrahl eine hohe Leistung aufweist, da wiederum durch das sozusagen oben liegende Blech durchgeschweißt werden muss, bevor das entstehende Schmelzbad das "unten liegende" Blech erreicht. Weiterhin ist die Positionierung des Laserstrahls in der automatisierten Fertigung extrem schwierig, da die genaue Stelle, an der geschweißt werden muss, um die Vorteile der Formgestaltung der beiden aufeinander liegenden Bleche ausnutzen zu können, lageempfindlich ist. Auch ist die genaue Sollposition des Laserstrahls mit den bekannten optischen Führungsmitteln nicht lokalisierbar. Weiterhin ist dieses Verfahren insofern nachteilig, als die Krümmungsradien genau eingehalten werden müssen, da die angestrebten Vorteile sonst nicht erreicht werden. Wegen des Verschleißes der eingesetzten Werkzeuge wird die Toleranz, mit der die geforderten Krümmungsradien einzuhalten sind, jedoch bei ablaufender Standzeit des Werkzeuges unterschritten, so dass die Güte der industriell gefertigten Schweißnähte wiederum abnimmt.

Bei der zuletzt diskutierten Technik "kissing welded" ist weiterhin, wie auch bei dem zuvor diskutierten Verfahren, insbesondere nachteilig, dass die Schweißnaht nicht unmittelbar an der Kante eines der beiden Bleche entlang geführt werden kann. Dies ist jedoch insbesondere im Karosseriebau häufig wünschenswert, nicht zuletzt aus optischen Gründen.

Aus der DE-OS 35 15 598 ist eine Verbindungsstelle zweier Dünnbleche bekannt, bei der ein Parallelstoß zweier aufeinander gelegter Bleche mit Hilfe einer lasergeschweißten Kehlnaht verbunden werden soll. Dieses Verfahren leidet an den eingangs erwähnten Nachteilen, d.h. die Schweißnaht wird bei zinkbeschichteten Stahlblechen unzufriedenstellend ausfallen.

Auch die DE-PS 39 09 471 C1 befasst sich mit der Entgasungsproblematik bei lasergeschweißten, beschichteten Blechen. In dieser Druckschrift wird vorgeschlagen, bei einem Überlappstoß zum Schweißen von beschichteten Werkstücken, insbesondere verzinkten Blechen, eine Rändelung des einen Werkstückes im Bereich der Schweißnaht vorzusehen. Abgesehen davon, dass diese Druckschrift dem Fachmann keinen Hinweis darauf gibt, wie eine Schweißung längs der Kante eines der Bleche auszuführen wäre, sind die vorgeschlagenen Rändelungen in einem eigenen Arbeitsschritt in das zu schweißende Blech einzuprägen, was mit hohen Kosten verbunden ist, die insbesondere im Bereich der industriellen Großfertigung nicht tragbar sind.

Auch die eingangs bereits diskutierte EP-PS 0 178 394 B1 offenbart in Figur 4 den Gedanken, bei einem Überlappstoß zweier Bleche, der von einem Laserstrahl durchgeschweißt wird, Rändelungen in Form eines gezackten Abschnittes vorzusehen, wodurch Kanäle geschaffen werden, die in Richtung der Schweißnaht parallel verlaufend ausgebildet sind. Eine solche Form von Ausnehmungen oder Zacken bzw. eine dadurch geschaffene Rändelung ist ersichtlich nicht dazu geeignet, die Entgasungsproblematik dann zu lösen, wenn ein Blech längs seiner Kante mit einem zweiten Blech verbunden werden soll.

Der Erfindung liegt daher die Aufgabe zugrunde, ein gattungsgemäßes Verfahren zum Besäumen eines tiefgezogenen Blechteils anzugeben, insbesondere eines Karosseriebauteils, das längs der Schnittkante mit einer Laserstrahl-Kehlnaht mit einem zweiten Blechbauteil verbunden werden soll, wobei zum Besäumen zwei scherend gegeneinander bewegte Schneidbacken verwendet werden, wobei die Schnittkante so ausgebildet wird, dass beim Aufsetzen auf das zweite Blechteil die Ausbildung einer erstklassigen Laserschweißnaht erst ermöglicht wird, oder aber das geschaffene Verfahren gemäß dem ersten Aspekt der Erfindung weiter verbessert wird.

Die Aufgabe wird durch ein Verfahren gemäß Anspruch 1 gelöst. Durch dieses erfindungsgemäße Verfahren werden an der Schnittkante des Bleches bereits während des Schneidens, d.h. bei einem notwendigen Bearbeitungsschritt, nicht hingegen in einem gesonderten Bearbeitungsschritt, Mittel geschaffen, die beim Aufsetzen der Schnittkante auf die Oberfläche eines zweiten Blechteils Entgasungskanäle erzeugen, die quer zur Schweißrichtung verlaufend angeordnet sind. Wie versuche ergeben haben, wird durch eine solcherart behandelte Schnittkante bereits ermöglicht, eine Kehlnaht an zwei Blechen mit erstklassiger Güte anzubringen, selbst wenn diese in Form eines Überlappstoßes parallel zueinander angeordnet sind.

Die an der besäumten Kante des an seiner Stirnseite zu verschweißenden Blechbauteils, d.h. ersten oder oberen Blechbauteils ausgeformten Zähnchen eine Höhe zwischen 5/100 und 5/10 mm. Es hat sich nämlich herausgestellt, dass streckenweise vorhandene Spalte, d.h. quer zur Schweißrichtung verlaufende Entgasungskanäle mit einer Höhe von lediglich 5/100 mm bereits ausreichend sind, um die oben geschilderte Entgasungsproblematik zu lösen, insbesondere dann, wenn zur blechseitigen Richtung der Schweißnaht hin ein Entgasungsraum vorgesehen ist, wie er durch den spitzen Winkel, der erfindungsgemäß vorgeschlagen wird, geschaffen wird.

Besonders bevorzugt ist jedoch vorgesehen, die miteinander zu verschweißenden Bleche im Nahtbereich unter einem spitzen Winkel aufeinander stoßend anzuordnen und zusätzlich dafür Sorge zu tragen, dass die auf dar Oberfläche des zweiten Blechteils aufliegende Schnittkante des ersten Blechteils von jener streckenweise zur Bildung von Entgasungskanälen dadurch beabstandet ist, dass an der Schnittkante des besäumten, d.h. ersten oder oberen Blechbauteils Zähne ausgebildet sind, die mit dem erfindungemäßen Besäumungsverfahren hergestellt wurden.

Die Erfindung wird im Folgenden anhand von in der Zeichnung dargestellten Ausführungsbeispielen näher erläutert. In der Zeichnung zeigen:
- Figur 1: zwei unter einem spitzen Winkel aufeinander stoßend angeordnete Stahlbleche,
- Figur 2: zwei im Überlappstoß zueinander angeordnete Stahlbleche gemäß dem Stand der Technik,
- Figur 3: einen Ausschnitt aus dem Querschnitt durch den Dachkanal einer Kraftfahrzeugkarosserie,
- Figur 4: eine Schneidbacke zur Verwendung bei dem Verfahren zum Besäumen von Blechteilen zur Vorbereitung auf eine Schweißnaht,
- Figur 5: alternative Ausführungsformen der in der Schneidbacke gemäß Figur 4 vorgesehenen Ausbrüche,
- Figur 6: eine Schweißnaht mit zusätzlicher Kantenverrundung im Schnitt,
- Figur 7: eine Schweißnaht ohne Kantenverrundung,
- Figur 8: die Schweißnaht gemäß Figur 6 nach dem Lackieren,
- Figur 9: die Schweißnaht gemäß Figur 7 nach dem Lackieren, und
- Figur 10: eine schematische Darstellung einer weiteren Ausführungsform des Verfahrens.

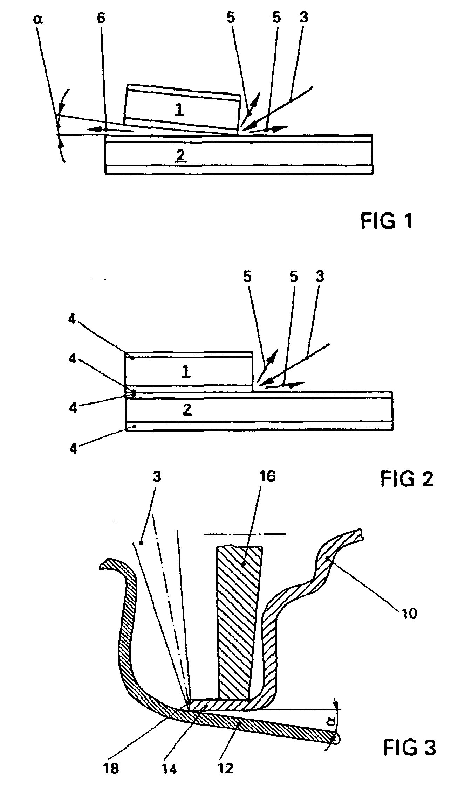

Figur 2 zeigt gemäß dem Stand der Technik zwei in Form eines Überlappstoßes aufeinander angeordnete Stahlbleche 1 und 2. Das erste Stahlblech wird im Rahmen dieser Beschreibung auch als oberes Stahlblech bezeichnet, unabhängig davon, ob es im Hinblick auf die Schwerkräfte tatsächlich oben liegt oder nicht. Das Stahlblech 1 soll mittels einer Kehlnaht mit dem unteren Stahlblech 2 verschweißt werden. Dabei wird das Stahlblech 1 längs seiner Stirnseite verschweißt, während das Stahlblech 2 längs seiner Oberfläche verschweißt wird. Zur Erzeugung der Laserstrahl-Kehlnaht wird ein Laserstrahl 3 längs der Kehle geführt. Da die Stahlbleche 1 und 2 jeweils eine Zinkbeschichtung 4 aufweisen, verdampft diese zunächst und entweicht in Richtung der gezeichneten Pfeile 5.Da nur ein Entgasungsweg offen steht, wird die durch den Laserstrahl 3 erzeugte Stahlschmelze gestört, so den Krater entstehen.

Figur 1 zeigt zwei unter einem spitzen Winkel α von etwa 7°bis 15° angeordnete Stahlbleche 1 und 2. Wird hier eine Kehlnaht durch einen Laserstrahl 3 erzeugt, so steht zusätzlich der durch den Pfeil 6 symbolisierte Entgasungsweg offen. Die entstehenden Zinkdämpfe können also auch in blechseitiger Richtung abziehen, wodurch eine Laserstrahl-Kehlnaht von einwandfreier Güte gewährleistet ist.

Figur 3 zeigt einen Querschnitt durch einen Teil des so genannten Dachkanals bei Kraftfahrzeugkarosserien, einem bevorzugten Anwendungsfall für das Laserschweißverfahren. Ein Dachbauteil 10 soll mit dem die Dachleiste bildenden Bauteil 12 verschweißt werden. Es ist vorgesehen, dass die Querschnittsform der Teile 10 und 12 so aufeinander abgestimmt ist, dass die Teile einen spitzen Winkel α miteinander einschließend angeordnet werden können. Dabei wird bei der Auslegung insbesondere der Winkelstellung einer zum Verschweißen vorgesehenen Lippe 14 des Dachteiles 10 diese so dimensioniert werden, dass beim Verspannen der Teile gegeneinander in einer Schweißlehre die notwendigen Klemmittel 16, hier in Form einer kontinuierlich bewegten Rolle, die elastischen Teile so verformen, dass genau der gewünschte Spitzenwinkel α eingestellt wird, d.h. insbesondere zwischen 7°und 15°beträgt. Beim Erzeugen der Kehlnaht durch den Laserstrahl 3 können die entstehenden Zinkdämpfe in Richtung des Spitzenwinkels α zusätzlich abziehen, wodurch eine einwandfreie Laserschweißnaht gewährleistet wird.

Die Kontur, d.h. die Querschnittsform, des Dachbauteils 10 ist in einer Tiefziehpresse festgelegt worden. In der Triefziehpresse wird eine Platine bearbeitet, deren Abmessungen geringfügig größer sind als die Abmessungen des Dachbauteiles 10. Es ist daher notwendig, die Stirnfläche 18 durch Besäumen des tiefgezogenen Blechbauteiles, d.h. des Dachbauteiles 10 zu fertigen. Dabei werden gegeneinander scherende Schneidbacken verwendet.

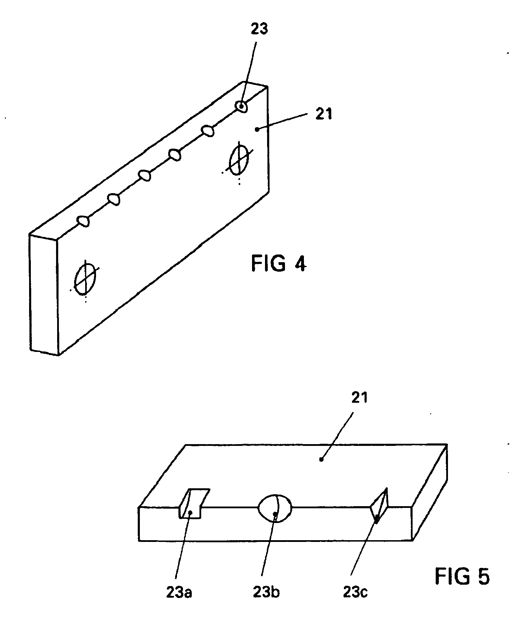

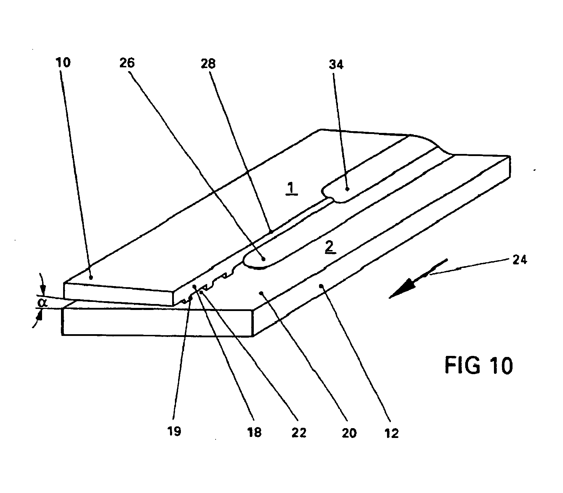

Wird eine Schneidbacke 21 gemäß Figur 4 verwendet, bei der in der Schneidkante kleine Ausbrüche 23 angeordnet sind, so werden während des Schneidvorganges an der Schnittkante des Blechbauteils, in diesem Fall des Dachbauteils 10, kleine Zähnchen 19 erzeugt, so dass die Schnittkante wie in Figur 10 gezeigt mittels der kleinen Zähnchen 19 auf der Oberfläche 20 des zweiten Bauteiles 12 aufliegt. Auf diese Weise werden Entgasungskanäle 22 gebildet, die quer zur Schweißrichtung ausgerichtet sind. Die Schweißrichtung wird durch den Pfeil 24 symbolisiert, wobei es unerheblich ist, ob der die Kehlnaht 26 erzeugende Laserschweißstrahl über den Schrägstoß geführt wird, oder ob das zu bearbeitende Werkstück gegenüber dem feststehenden Laserstrahl geführt wird.

Figur 5 zeigt alternative Ausführungsformen 23a, 23b und 23c der in der Schneidkante der Schneidbacke 21 anzuordnenden Ausbrüche.

Wird wie in Figur 10 dargestellt lediglich die Kehlnaht 26 hergestellt, so verbleibt die freiliegende Kante 28 des oberen Blechbauteils, d.h. des Dachbauteils 10.

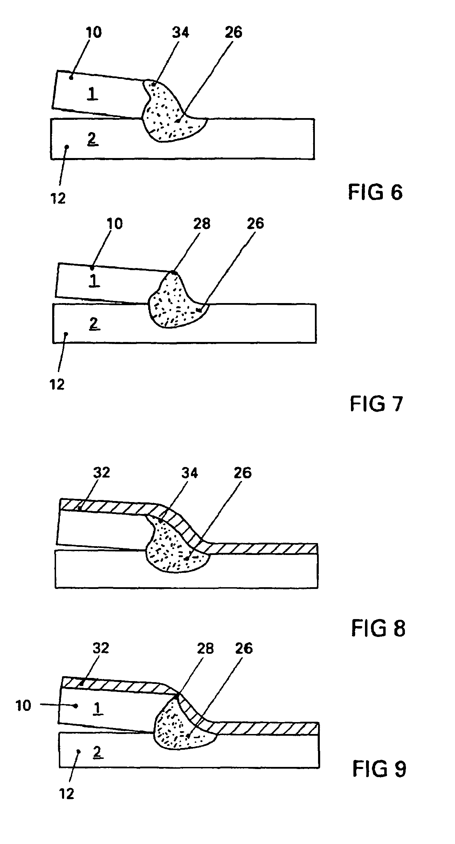

Figur 7 zeigt einen Schnitt durch die lasererzeugte Kehlnaht 26 gemäß Figur 10. Die freiliegende Kante 28 des oberen Blechteile 1, d.h. des Dachbauteils 10 würde, ließe man sie unbehandelt, beim Lackieren zu einem Verlauf der Lackschicht 32 führen, wie in Figur 9 dargestellt ist. Figur 9 zeigt die so genannte Lackflucht im Bereich der scharfen Kante 28, die zu einer deutlich dünneren Lackschicht In diesem Bereich führt, als für einen Korrosionsschutz notwendig ist.

Wie Figur 10 zeigt, kann Abhilfe geschaffen werden, indem ein zweiter Laserstrahl über die freiliegende Kante 28 geführt wird und diese zum Schmelzen bringt. Es entsteht so anstelle der scharfen Kante 28 eine zusätzliche Schweißraupe 34, die zu einer Querschnittsform der gesamten Schweißnaht führt, wie sie in Figur 6 dargestellt ist. Wird die in gemäß Figur 6 dargestellte Schweißnaht lackiert, so wird eine Lackschicht ausgebildet, wie sie in Figur 8 dargestellt ist, d.h. mit gleichmäßigem Dickenverlauf.

Die vorgeschlagenen Maßnahmen ermöglichen es jeweils für sich, insbesondere jedoch bei kombinierter Anwendung, eine Laserschweißnaht höchster Güte im Rahmen der industriellen Verarbeitung, insbesondere zinkbeschichteter Stahlbleche, herzustellen.

## Patentansprüche

1. Verfahren, wobei zum Besäumen eines tiefgezogenen Blechteils, insbesondere Karosseriebauteils, das längs der Schnittkante mit einem zweiten Blechteil verbunden werden soll, zwei scherend gegeneinander bewegte Schneidbacken (21) verwendet werden, wobei die Schneidkante zumindest einer der Schneidbacken Ausbrüche (23) aufweist, **dadurch gekennzeichnet, dass** längs der Schnittkante (18) des besäumten Blechbauteils (10) zur Bildung von Entgasungskanälen Zähne (19) ausgebildet werden, die eine Höhe zwischen 5/100 und 5/10 mm haben und dass die Blechteile mittels einer Laserstrahl-Kehlnaht verbunden werden.

2. Verfahren nach Anspruch 1, **dadurch gekennzeichnet, dass** die Ausbrüche prismenförmig sind.

3. Verfahren nach Anspruch 1 oder 2, **gekennzeichnet durch** Verbinden zweier Stahlbleche (1, 2; 10, 12), von denen zumindest eine Beschichtung (4) einen niedrigen Schmelzpunkt aufweist, **durch** eine Laserschweißnaht, wobei die Bleche vor Verschweißen im Nahtbereich unter einem spitzen Winkel (α) aufeinander stoßend angeordnet werden und die Schweißnaht als Kehlnaht (26) ausgebildet wird.

4. Verfahren nach Anspruch 3, **dadurch gekennzeichnet, dass** der im Nahtbereich zwischen den beiden Blechen eingeschlossene spitze Winkel (α) zwischen 7 ° und 15 ° beträgt.

5. Verfahren nach Anspruch 3, **dadurch gekennzeichnet, dass** die Querschnittsformen der miteinander zu verbindenden Teile (10, 12) speziell im Nahtbereich so gestaltet sind, dass nach Anlegen einer Vorspannkraft mittels einer Klemmvorrichtung (16) ein definierter Spitzenwinkel ( α ) zwischen den beiden Blechen eingeschlossen wird.

## Claims

1. Process, wherein two cutting jaws (21) moved towards one another with a shearing action are used for trimming a deep drawn sheet metal part, in particular a motor car body component, which is to be connected to a second sheet metal part along the cut edge, wherein the cutting edge of at least one of the cutting jaws has cavities (23), **characterized in that** teeth (19) are formed along the cut edge (18) of the trimmed sheet metal component (10) for forming degassing passages, said teeth (19) having a height of between 5/100 and 5/10 mm, and **in that** the sheet metal parts are connected by means of a laser beam fillet weld.

2. Process according to Claim 1, **characterized in that** the cavities are prismatic.

3. Process according to Claim 1 or 2, **characterized by** the connection of two steel sheets (1, 2; 10, 12), of which at least one coating (4) has a low melting point, by a laser weld, wherein the sheets are arranged in an abutting relationship at an acute angle (α) in the weld region before the welding and the weld is formed as a fillet weld (26).

4. Process according to Claim 3, **characterized in that** the acute angle (α) enclosed between the two sheets in the weld region is between 7° and 15°.

5. Process according to Claim 3, **characterized in that** the cross-sectional shapes of the parts (10, 12) to be connected to one another are specifically formed in the weld region in such a way that a defined acute angle (α) is enclosed between the two sheets after a prestressing force is applied by means of a clamping device (16).

## Revendications

1. Procédé utilisant deux mâchoires de coupe (21) d'une cisaille déplacées l'une par rapport à l'autre pour déligner une pièce de tôle emboutie, en particulier un composant de carrosserie, qui doit être reliée à une deuxième pièce de tôle le long d'un bord de coupe, le tranchant de coupe d'au moins l'une des mâchoires de coupe présentant des creux (23), **caractérisé en ce que**
pour former des canaux de dégazage, des dents (19) dont la hauteur est comprise entre 5/100 et 5/10 mm sont formées le long du bord de coupe (18) du composant (10) en tôle déligné et
**en ce que** les pièces de tôle sont reliées au moyen d'un cordon en biseau formé par un faisceau laser.

2. Procédé selon la revendication 1, **caractérisé en ce que** les creux ont une forme prismatique.

3. Procédé selon les revendications 1 ou 2, **caractérisé en ce qu'**il relie par un cordon de soudure obtenu par laser deux tôles d'acier (1, 2; 10, 12) dont l'une au moins présente un revêtement (4) à bas point de fusion, **en ce qu'**avant le soudage, les tôles sont jointes l'une à l'autre sous un angle aigu (α) dans la zone du cordon et **en ce que** le cordon de soudage est configuré comme cordon (26) en biseau.

4. Procédé selon la revendication 3, **caractérisé en ce que** l'angle aigu (α) formé dans la zone du soudage entre les deux tôles est compris entre 7° et 15°.

5. Procédé selon la revendication 3, **caractérisé en ce que** la forme de la section transversale des pièces (10, 12) qui doivent être reliées l'une à l'autre est configurée spécialement dans la zone de la soudure de telle sorte qu'un angle aigu (α) soit formé entre les deux tôles après application d'une force de précontrainte au moyen d'un dispositif de serrage (16).
